# EUROPÄISCHE PATENTSCHRIFT

(11) **EP 3 561 336 B1**
(45) Veröffentlichungstag und Bekanntmachung des Hinweises auf die Patenterteilung: **04.06.2025**
(21) Anmeldenummer: 19169291.2
(22) Anmeldetag: 15.04.2019
(51) Int. Cl.: F16D 65/12, E05F 5/00, F16D 69/02, F16D 71/00

(54) **BREMSMODUL FÜR EIN ANTRIEBSSYSTEM, ANTRIEBSSYSTEM UND HERSTELLUNGSVERFAHREN FÜR EIN BREMSMODUL**
BRAKE MODULE FOR A DRIVE SYSTEM, DRIVE SYSTEM AND METHOD FOR PRODUCING A BRAKE MODULE
MODULE DE FREINAGE POUR UN SYSTÈME D'ENTRAÎNEMENT, SYSTÈME D'ENTRAÎNEMENT ET PROCÉDÉ DE FABRICATION POUR UN MODULE DE FREINAGE

(30) Priorität: 20.04.2018 DE 102018109569
(43) Veröffentlichungstag der Anmeldung: 30.10.2019
(73) Patentinhaber: Stabilus GmbH, 56070 Koblenz (DE)
(72) Erfinder: Schmengler, Marcel, 53474 Bad Neuenahr (DE); Hümmerich, Magnus, 56269 Dierdorf (DE); Mazepa, Sergei, 56759 Kaisersesch (DE)
(74) Vertreter: Bernsmann, Falk

(56) Entgegenhaltungen:
- DE-A1- 2 411 574
- DE-A1- 3 245 720
- DE-A1- 4 438 456
- JP-A- S6 392 840
- US-A- 4 187 932
- US-A- 4 828 089
- US-A1- 2015 140 256

## Beschreibung

Die Erfindung betrifft ein Bremsmodul für ein Antriebssystem, insbesondere für Türen, umfassend mindestens eine Anlaufscheibe und mindestens eine Bremsscheibe, wobei die mindestens eine Anlaufscheibe und die mindestens eine Bremsscheibe jeweils mindestens eine Reibfläche aufweisen, die im Bremsbetrieb aneinander reiben. Die Erfindung betrifft außerdem ein Antriebssystem, insbesondere für Türen, umfassend ein derartiges Bremsmodul. Die Erfindung betrifft weiterhin ein Herstellungsverfahren für ein Bremsmodul der oben genannten Art.

Aus EP 1 664 470 B1 ist ein Antriebssystem für Verstelleinrichtungen in Kraftfahrzeugen bekannt. Das Antriebssystem umfasst ein Gehäuse, in dem ein Antriebselement der Verstelleinrichtung, ein Scheibenläufermotor mit einer Ankerscheibe und ein Umlaufrädergetriebe angeordnet sind. Das Umlaufrädergetriebe weist ein gehäusefestes Hohlrad mit einer Innenverzahnung, ein mit dem Antriebselement der Verstelleinrichtung verbundenes Abtriebshohlrad mit einer Innenverzahnung und einen radialflexiblen Ring auf, dessen Außenverzahnung partiell mit den Innenverzahnungen des gehäusefesten Hohlrades und des Abtriebshohlrades kämmt und dessen Innenmantelfläche auf Laufrollen abrollt. Das Abtriebshohlrad kann mit einer Schlingfederbremse verbunden sein, wodurch die Selbsthemmung des Antriebssystems erhöht und beispielsweise bei einem Fensterheber verhindert wird, dass durch Herunterdrücken der Fensterscheibe ein unberechtigter Zugang zum Fahrzeuginneren geschaffen wird.

US 2013/0169087 A1 offenbart ein Antriebssystem zum in Bewegung setzen eines beweglichen Panels eines Fahrzeugs. Das Antriebssystem umfasst in einer Ausführungsform ein mechanisches Bremsmodul, welches eine rohrförmige Bremswelle und eine koaxial darin angeordnete Spiralfeder aufweist.

Im Stand der Technik werden solche Antriebssysteme insbesondere zum elektromechanischen Öffnen und Schließen von Türen, wie beispielsweise von Fahrzeugtüren, verwendet. Das Antriebssystem kann dabei einerseits bei einem manuellen Öffnen, Offenhalten und Schließen der Tür unterstützen und / oder die Tür eigenständig öffnen und schließen. Die Kraft eines Elektromotors wird beispielsweise in einem Linearantrieb über eine Gewindespindel an die Tür übertragen.

Das Bremsmodul hat dabei mehrere Funktionen. Zum einen ermöglicht es zum Beispiel eine recht schwere Heckklappe eines Fahrzeugs in einer (beliebigen) Winkelposition zu halten und andererseits eine gleichmäßigere Bewegung des Antriebssystems. Weiterhin können Beschädigungen beispielsweise an einer Heckklappe beim Schließen durch zu hohe Beschleunigungskräfte (insbesondere durch eine Handkraft des Benutzers und eine Gewichtskraft der Heckklappe) durch die entgegengesetzte Bremskraft bzw. das resultierende Drehmoment vermieden werden.

Die Höhe der Bremskraft kann insbesondere durch die Materialwahl und/oder Anzahl der Reibpartner, deren Geometrie sowie gegebenenfalls über die Wahl der Federkraft einer Feder bestimmt werden, die die Anlaufscheibe(n) an eine Bremsscheibe andrückt.

Üblicherweise drehen sich die Bremsscheibe und die Anlaufscheib(en) relativ zueinander im Bremsbetrieb. Übliche Materialien für die Reibpartner sind gesinterter Stahl für die Bremsscheibe und nitrierter Chromstahl für die Anlaufscheibe. US 4 828 089 A beschreibt eine Bremse mit einem Reibmaterial aus pyrolytischem Kohlenstoff, das direkt durch eine Flüssigkeit gekühlt wird. JP S63 92840 A offenbart eine flüssigkeitsgekühlte Bremsscheibe.

Bei gattungsgemäßen Bremsmodulen besteht das Problem, dass die Bremskraft über die Lebensdauer der Bremsmodule nicht konstant und zusätzlich temperaturabhängig ist.

Aufgabe der Erfindung ist es daher, ein kostengünstiges Bremsmodul für ein Antriebssystem sowie ein einfach umzusetzendes Herstellungsverfahren dafür bereitzustellen, das eine vorhersagbare Bremskraft für das Antriebssystem bereitstellt und eine Lebensdauer des Antriebssystems erhöht.

Der Gegenstand der vorliegenden Erfindung stellt ein Bremsmodul für ein Antriebssystem bereit, das diese Aufgabe erfindungsgemäß entsprechend den Merkmalen des Anspruches 1 löst. Ebenso wird die Aufgabe durch ein Antriebssystem gemäß den Merkmalen des Anspruchs 8 und ein Verfahren entsprechend den Merkmalen des Anspruches 9 gelöst. Vorteilhafte Ausgestaltungen ergeben sich aus den abhängigen Ansprüchen.

Ein erfindungsgemäßes Bremsmodul für ein Antriebssystem, insbesondere für Türen, umfasst mindestens eine Anlaufscheibe und mindestens eine Bremsscheibe, wobei die mindestens eine Anlaufscheibe und die mindestens eine Bremsscheibe jeweils mindestens eine Reibfläche aufweisen, die im Bremsbetrieb aneinander reiben.

Unter dem Begriff "Tür" wird im Sinne der Erfindung ein Bauteil zum zumindest teilweise Verschließen einer Öffnung eines Bauwerks, eines Geräts oder eines Fahrzeugs verstanden. Insbesondere kann die "Tür" eine Fahrzeugtür, beispielsweise eine Zugangstür für Passagiere des Fahrzeugs, eine Motorhaube, eine Gepäckraumklappe, eine Laderaumtür oder eine Heckklappe sein. Ein "Fahrzeug" im Sinne der Erfindung kann beispielsweise ein Landfahrzeug, ein Wasserfahrzeug oder ein Luftfahrzeug, insbesondere ein Automobil sein. Das erfindungsgemäße Bremsmodul ist besonders für ein Antriebsmodul für Fahrzeugtüren geeignet, weil dort, beispielsweise aus Gründen der Betriebssicherheit eine konstante und vorhersagbare Bremskraft besonders wichtig ist. Außerdem sind Antriebssysteme für Fahrzeugtüren oft so verbaut, dass sie nur schwierig austauschbar sind, sodass eine lange Lebensdauer besonders wichtig ist.

Mindestens eine der Reibflächen der Bremsscheibe ist von einer Reibschicht zum Schutz der Bremsscheibe und/oder Anlaufscheibe vor Verschleiß gebildet, wobei zumindest die Reibschicht Fasern und Kohlenstoff, nämlich ein Karbonfasergewebe, umfasst. Dadurch lässt sich eine über die Lebensdauer des Bremsmoduls konstantere Bremskraft, eine geringere Temperaturabhängigkeit der Bremskraft und eine höhere Lebensdauer des Bremsmoduls erzielen. Daher kann die Bremskraft auch besser an die jeweilige Anwendung angepasst werden und es ist ein deutlich geringerer Toleranzausgleich notwendig. Im Falle der Verwendung für eine Heckklappe eines Fahrzeuges ermöglicht dies zum Beispiel für mittlere Temperaturen des Bremssystems (ca. 20 °C) eine geringere Bremskraft und damit ein leichteres Betätigen aus jeder Ausgangsposition in jede andere Endposition der Tür, also insbesondere einem Öffnen oder einem Schließen, der Heckklappe. Die Endposition kann eine beliebige Zwischenposition zwischen einer maximalen Öffnungsposition und einer Verschlussposition sein. Gleichzeitig wird die Funktionalität bei höheren Temperaturen oder zu Beginn der Verwendung des Antriebssystems nicht eingeschränkt. Insbesondere wird das Antriebssystem über die Lebensdauer und über veränderliche Betriebsparameter (wie zum Beispiel die Temperatur des Bremsmoduls) zuverlässiger und gleichzeitig leichtgängiger, weil eine Sicherheitstoleranz zwischen einer minimalen Bremskraft, um die Tür in jeder Zwischenposition halten zu können, und einer Handkraft zur Positionsveränderung kleiner ausgelegt werden kann.

Die konstantere und besser vorhersagbare Bremskraft im Vergleich zu einer gesinterten Bremsscheibe lässt sich zum Teil durch die gleichmäßigere Oberfläche einer erfindungsgemäßen Bremsscheibe erklären. Gesinterte Bremsscheiben weisen durch den Sinterprozess zu Beginn abgerundete Randbereiche und damit eine verringerte effektive Reibfläche auf. Eine Bremsscheibe mit einer erfindungsgemäßen Reibschicht zum Schutz der Bremsscheibe vor Verschleiß hat hingegen von vornherein eine flachere Reibfläche und die effektive Reibfläche verändert sich im Laufe des Betriebs des Bremsmoduls nicht.

Weitere Ausgestaltungen werden beispielhaft anhand von Reibschichten, die Reibflächen der Bremsscheibe bilden, beschrieben. Im Sinne der Erfindung lassen sich diese Ausgestaltungen zusätzlich auch auf Reibschichten, die Reibflächen der Anlaufscheibe bilden, übertragen.

Vorzugsweise ist jede Reibfläche der Bremsscheibe von jeweils einer erfindungsgemäßen Reibschicht gebildet. Dadurch treten die vorgenannten Wirkungen der Reibschichten besonders deutlich auf.

Ein Teil der Bremsscheibe, wie beispielsweise eine oder mehrere Schichten der Bremsscheibe, ist von der Reibschicht gebildet. Die Reibschicht der Bremsscheibe kann also eine oder mehrerer Oberflächenschichten (beispielsweise Reibschichten) der Bremsscheibe bilden.

Die Reibschicht umfasst Karbonfasern, nämlich ein Karbonfasergewebe. Karbonfasern, insbesondere in einem Karbonfasergewebe, können bei geringem Gewicht sehr hohen mechanischen Belastungen standhalten, insbesondere wenn jeweils eine hohe Anzahl von Fasern zu einem Filamentgarn zusammengefasst ist. Dadurch wird eine hohe Zuverlässigkeit des Bremsmoduls bei gleichzeitig geringem Gewicht erzielt.

Die Reibschicht kann einen faserverstärkten, bevorzugt glasfaserverstärkten und/oder karbonfaserverstärkten, Kunststoff umfassen. In Form eines faserverstärkten Kunststoffs können die überragenden mechanischen Eigenschaften der Fasern vorteilhaft mit der einfachen Verarbeitung eines Kunststoffs kombiniert werden, sodass sich ein zuverlässiges, leichtes und kostengünstig herzustellendes Bremsmodul ergibt.

Die Reibschicht kann eine, bevorzugt metallhaltige und/oder wasserstoffhaltige, amorphe Kohlenstoffschicht umfassen. Amorphe Kohlenstoffschichten zeichnen sich durch eine hohe Verschleißbeständigkeit aus. Durch Dotieren von wasserstoffhaltigen amorphen Kohlenstoffschichten (a-C:H) mit Metallen bildet sich ein Verbund aus einer a-C:H Matrix und Metallkarbiden. Schichten aus diesem Material besitzen hohe Verschleißfestigkeiten, geringe Reibkoeffizienten sowie bessere Haftung der Schichten. Durch Veränderung des Metallgehaltes lassen sich die Materialeigenschaften stark beeinflussen und somit auf die Anforderungen des Antriebssystems anpassen.

Das Bremsmodul kann eine Feder umfassen, die die Bremsscheibe durch eine Federkraft an die mindestens eine Anlaufscheibe andrückt. Die Feder ist vorzugsweise eine Wellenfeder, wodurch eine gleichmäßige Federkraft erzielt und das Bremsmodul stabilisiert wird. Die Feder kann auf einer der Bremsscheibe gegenüberliegenden Seite einer Anlaufscheibe angeordnet sein und die Anlaufscheibe an die Bremsscheibe andrücken.

Das Bremsmodul kann je eine Anlaufscheibe auf zwei gegenüberliegenden Seiten der Bremsscheibe umfassen, wobei die Bremsscheibe je eine jeder der Anlaufscheiben zugewandte Reibfläche mit je einer erfindungsgemäßen Reibschicht umfasst. Durch die Verwendung von zwei Anlaufscheiben auf beiden Seiten der Bremsscheibe lässt sich eine höhere Lebensdauer und höhere Bremskraft erzielen, ohne die Abmessungen des Bremsmoduls wesentlich zu erhöhen.

Die Bremsscheibe umfasst einen Träger, aus Gewichts-, Kosten- und gleichzeitig Stabilitätsgründen insbesondere aus Kunststoff, und mindestens eine mit dem Träger verbundene Reibschicht, vorzugsweise zwei auf gegenüberliegenden Seiten des Trägers mit dem Träger verbundene Reibschichten. Erfindungsgemäß umfasst die Bremsscheibe mehrere Schichten, wodurch sich bessere Gesamteigenschaften der Bremsscheibe erzielen lassen. Der Träger kann beispielsweise weniger elastisch oder elastischer sein als eine komplett aus einer Reibschicht bestehende Bremsscheibe (je nach Anforderung der Nutzungsspezifikationen und des Antriebsystems, in dem die Bremsscheibe eingesetzt wird). Außerdem lässt sich das thermische Ausdehnungsverhalten der Bremsscheibe bei Verwendung zweier oder mehrerer verschiedener Materialien besser auf das thermische Ausdehnungsverhalten der Anlaufscheibe(n) abstimmen und so die Temperaturabhängigkeit des Bremsmoments reduzieren. Weiterhin kann der Träger aus einem kostengünstigen Material, beispielsweise einem Kunststoff, bestehen, wodurch sich Gesamtkosten der Bremsscheibe reduzieren lassen.

Die mindestens eine Reibschicht kann stoffschlüssig, vorzugsweise mit einem, vorzugsweise teilelastischen, Klebstoff an dem Träger befestigt sein. Eine stoffschlüssige Verbindung, beispielsweise durch einen Klebstoff oder durch Beschichten des Trägers mit einer amorphen Kohlenstoffschicht, sorgt für eine besonders langzeitstabile und zuverlässige Verbindung der Reibschicht mit dem Träger. Der teilelastische Kleber kann beispielsweise unterschiedliche thermische Ausdehnungskoeffizienten der Reibschicht(en) und des Trägers ausgleichen. Weiterhin erlaubt der teilelastische Kleber eine verbesserte Vibrationsdämpfung.

Die mindestens eine Anlaufscheibe besteht aus Stahl, nämlich aus, erfindungsgemäß nicht-nitriertem, Chrom-5-Stahl. Es hat sich herausgestellt, dass eine Anlaufscheibe aus nicht-nitriertem Chrom-5-Stahl zwar eine geringere Lebensdauer aufweist als eine Anlaufscheibe aus nitriertem Chrom-5-Stahl, sich die Vibrations- und Geräuschentwicklung bei Reibung mit einer Bremsscheibe aus faserverstärktem Kunststoff aber deutlich gegenüber nitriertem Chrom-5-Stahl verringert. Ein solches erfindungsgemäßes Bremsmodul mit Anlaufscheibe(n) aus nicht-nitriertem Chrom-5-Stahl weist insgesamt dennoch eine vergleichbare oder sogar höhere Lebensdauer als ein Bremsmodul des Standes der Technik auf.

Die Bremsscheibe kann ringförmig sein und insbesondere eine zentrale Ausnehmung aufweisen, wobei die zentrale Ausnehmung vorzugsweise näherungsweise kreisförmig ist, insbesondere mit mindestens zwei durch eine Anzahl von, beispielsweise einer, zwei, drei, vier, fünf, sechs oder sieben, Aussparungen voneinander getrennten Zahnabschnitten, wobei die Zahnabschnitte vorzugsweise radial nach innen vorspringende Zähne umfassen. Eine solche Ausgestaltung erlaubt eine flexiblere Verbindung der Bremsscheibe, beispielsweise mit einer Antriebswelle, insbesondere einer Gewindespindel, des Antriebssystems. Ein Verkanten der Bremsscheibe und der Spindelmutter wird dadurch unwahrscheinlich. Somit ist es auch leichter, das Bremsmodul erst spät in einem Produktionsprozess eines Antriebssystems zu installieren und Vibrationsschäden bei der Montage zu vermeiden bzw. es zu entfernen, falls das Bremsmodul defekt ist. Ein näherungsweise kreisförmiger Querschnitt der Ausnehmung kann beispielsweise bedeuten, dass der Querschnitt bis auf die radial nach innen vorstehenden Zahnabschnitte kreisförmig ist. Die Aussparungen sind vorteilhafterweise in Umfangsrichtung der Bremsscheibe gleichmäßig, also mit konstantem Winkelabstand voneinander, um die Ausnehmung verteilt, um eine gleichmäßige Belastung der Bremsscheibe und somit eine hohe Lebensdauer derselben sicherzustellen.

Die Bremsscheibe und/oder die Anlaufscheibe können in einer Reibfläche eine Anzahl von Vertiefungen zur Aufnahme eines Schmiermittels aufweisen. Die Vertiefungen können als Reservoir für ein auf die Reibpartner, also auf Chrom-5-Stahl und eine kohlenstoffhaltige Reibschicht, abgestimmtes Schmiermittel dienen und damit die Lebensdauer des Bremsmoduls erhöhen, ohne dass große Mengen des Schmiermittels notwendig sind.

Das Bremsmodul kann ein Gehäuse umfassen, in dem die Bremsscheibe und die mindestens eine Anlaufscheibe, vorzugsweise koaxial um eine zentrale Achse, insbesondere die Längsachse einer Antriebswelle, insbesondere einer Gewindespindel, des Antriebssystems, geführt sind, wobei das Bremsmodul vorzugsweise eine Deckscheibe umfasst, die, vorzugsweise durch eine Rastverbindung, mit dem Gehäuse derart verbunden ist, dass die Bremsscheibe und die mindestens eine Anlaufscheibe im Gehäuse gehalten sind. Die Deckscheibe kann beispielsweise Rastausnehmungen aufweisen, in die Rasthaken des Gehäuses eingreifen können. Vorteilhafterweise kann die Rastverbindung so ausgestaltet sein, dass die Deckscheibe nicht zerstörungsfrei von dem Gehäuse getrennt werden kann. Dadurch werden in dem Gehäuse angeordnete Komponenten vor Manipulationen geschützt.

Vorzugsweise ist der Aufbau des Bremsmoduls entlang der Längsachse: Feder, Anlaufscheibe, Bremsscheibe, Anlaufscheibe, Deckscheibe. Vorzugsweise sind diese Komponenten alle zumindest teilweise vom Gehäuse umgeben. Damit lässt sich eine einfache Montage des Bremsmoduls im Antriebssystem erreichen, ohne dass die Gefahr besteht, einen Teil des Bremsmoduls zu verlieren.

Das Gehäuse kann eine Anzahl von, beispielsweise einem, zwei, drei, vier, fünf, sechs oder sieben, Gehäuseschlitzen umfassen, deren Schlitzlängsachse vorteilhafterweise parallel zu der Längsachse der Antriebswelle ausgerichtet ist. Ferner kann zumindest eine Anlaufscheibe radial von der Längsachse nach außen gerichtete Anlaufscheibenvorsprünge aufweisen, die komplementär zu den Gehäuseschlitzen geformt sind, sodass die Gehäuseschlitze und die Anlaufscheibenvorsprünge gegen eine Verdrehung der Anlaufscheibe gegenüber dem Gehäuse um die Längsachse formschlüssig zusammenwirken. Dadurch wird verhindert, dass sich die Anlaufscheibe bei einem Bremsvorgang mit der Bremsscheibe mitdreht, was die Bremswirkung verringern oder sogar aufheben könnte. Durch eine Ausrichtung der Schlitzlängsachse parallel zu der Längsachse der Antriebswelle kann die Anlaufscheibe bei einer Montage des Bremsmoduls einfach entlang der Längsachse in das Gehäuse eingeführt werden. Vorteilhafterweise sind die Gehäuseschlitze in Umfangsrichtung des Gehäuses um die Längsachse gleichmäßig, also mit kontantem Winkelabstand voneinander, verteilt. Dadurch wird das Gehäuse gleichmäßig belastet, was seine Lebensdauer erhöht.

Die erfindungsgemäße Aufgabe wird auch durch ein Antriebssystem, insbesondere für eine Tür, umfassend ein Bremsmodul nach einer der vorstehenden Ausführungsformen gelöst.

Die erfindungsgemäße Aufgabe wird auch durch ein Herstellungsverfahren für ein erfindungsgemäßes Bremsmodul gelöst, das Bremsmodul umfassend mindestens eine Anlaufscheibe und mindestens eine Bremsscheibe, wobei die mindestens eine Anlaufscheibe und die mindestens eine Bremsscheibe jeweils mindestens eine Reibfläche aufweisen, die im Bremsbetrieb aneinander reiben, wobei das Verfahren die folgenden Schritte umfasst:
a. Bereitstellen eines, insbesondere scheibenförmigen, Trägers,
b. Bereitstellen mindestens eines Anlaufscheibenrohlings für die Anlaufscheibe aus nicht-nitriertem Chrom-5-Stahl,
b. Beschichten des Trägers auf mindestens einer Seite mit einer Fasern und Kohlenstoff, nämlich ein Karbonfasergewebe, umfassenden Reibschicht zum Verschleißschutz, um die Bremsscheibe zu formen.

Das Material mindestens einer Reibschicht der Bremsscheibe umfasst somit Fasern und Kohlenstoff, nämlich ein Karbonfasergewebe, wodurch sich eine zeitlich konstantere Bremskraft, eine geringere Temperaturabhängigkeit der Bremskraft und eine höhere Lebensdauer des Bremsmoduls erzielen lässt. Dadurch kann die Bremskraft besser an die jeweilige Anwendung angepasst werden und es ist ein deutlich geringerer Toleranzausgleich notwendig. Der Träger kann beispielsweise elastischer oder weniger elastisch sein als eine komplett aus der Reibschicht bestehende Bremsscheibe. Außerdem lässt sich das thermische Ausdehnungsverhalten der Bremsscheibe bei Verwendung mehrerer, insbesondere zweier, verschiedener Materialien besser auf das thermische Ausdehnungsverhalten der Anlaufscheibe(n) abstimmen und so die Temperaturabhängigkeit der Bremskraft reduzieren. Weiterhin kann der Träger aus einem kostengünstigen Kunststoff bestehen, wodurch sich Gesamtkosten der Bremsscheibe reduzieren lassen.

Vorzugsweise wird der Träger auf zwei gegenüberliegenden Seite mit einer Reibschicht beschichtet um die Bremsscheibe zu formen.

Der Schritt des Beschichtens des Trägers kann ein Auftragen einer, vorzugsweise teilelastischen, Klebstoffschicht auf mindestens einer Seite des Trägers umfassen, wonach die Reibschicht auf die Klebstoffschicht aufgetragen wird. Die Klebstoffschicht kann beispielsweise unterschiedliche thermische Ausdehnungskoeffizienten der Reibschicht(en) und des Trägers ausgleichen. Weiterhin erlaubt die Klebstoffschicht eine verbesserte Vibrationsdämpfung.

Der Klebstoff kann isobar und variotherm ausgehärtet werden. Dadurch wird eine dauerhafte Verbindung zwischen Träger und Reibschicht erzielt.

Das Herstellungsverfahren kann außerdem die folgenden Schritte umfassen:
a. Bereitstellen mindestens eines scheibenförmigen Anlaufscheibenrohlings, der aus Stahl, nämlich aus, erfindungsgemäß nicht-nitriertem, Chrom-5-Stahl besteht, und vorzugsweise
b. Polieren des Anlaufscheibenrohlings, vorzugsweise durch Kugelpolieren, um die Anlaufscheibe zu formen.

Es hat sich herausgestellt, dass durch Polieren und insbesondere Kugelpolieren eine besonders gleichmäßige Reibfläche erzielt werden kann, die weniger richtungsabhängige Artefakte aufweist. Auch dadurch kann der Effekt vermindert werden, dass sich die Anlaufscheibe erst im Betrieb "flachbremst" und die Bremskraft anfänglich, beispielsweise in den ersten einigen hundert Bremszyklen stark variiert. Weiterhin führt eine gleichmäßige Reibfläche zu weniger Vibrationen bei einem Bremsvorgang und somit zu einer geringen Geräuschentwicklung.

Der mindestens eine Anlaufscheibenrohling kann, insbesondere zusätzlich zu dem Polieren, beispielsweise vor dem Polieren, entgratet werden. So lässt sich eine noch gleichmäßigere Reibfläche der Anlaufscheibe erzielen.

Weitere Vorteile, Ziele und Eigenschaften vorliegender Erfindung werden anhand nachfolgender Beschreibung und anliegender Zeichnungen erläutert, in welchen beispielhaft erfindungsgemäße Bremsmodule und Herstellungsverfahren dargestellt sind. Bauteile der Vorrichtungen, welche in den Figuren wenigstens im Wesentlichen hinsichtlich ihrer Funktion übereinstimmen, können hierbei mit gleichen Bezugsziffern gekennzeichnet sein, wobei diese Bauteile nicht in allen Figuren beziffert und erläutert sein müssen.

### Es zeigen:

- Fig. 1: ein erfindungsgemäßes Bremsmodul in Außenansicht;
- Fig. 2: das Bremsmodul der Fig.1 in Schnittansicht;
- Fig. 3: das Bremsmodul der Fig.1 und 2 in Explosionsdarstellung;
- Fig. 4: einen Teil des Bremsmoduls der Fig.1, 2 und 3 in einer weiteren Explosionsdarstellung;
- Fig. 5: eine erfindungsgemäße Bremsscheibe und eine Spindelmutter.
- Fig. 6: eine qualitative Darstellung der Abhängigkeit des Bremsdrehmoments eines Bremsmoduls des Standes der Technik in Abhängigkeit von der Anzahl der Bremszyklen und der Temperatur;
- Fig. 7: eine qualitative Darstellung der Abhängigkeit des Bremsdrehmoments eines erfindungsgemäßen Bremsmoduls in Abhängigkeit von der Anzahl der Bremszyklen und der Temperatur;
- Fig. 8: eine schematische Ablaufdarstellung eines erfindungsgemäßen Herstellungsverfahrens.

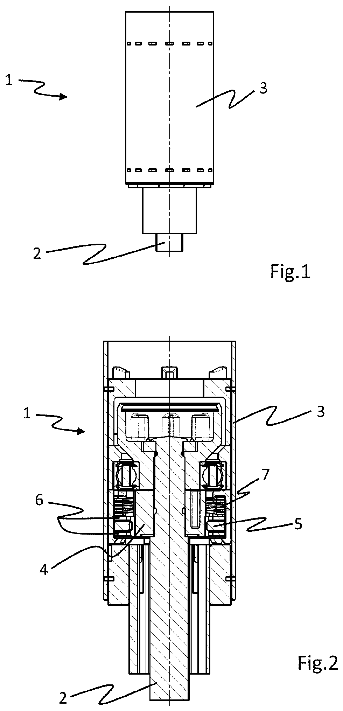

**Figur 1** zeigt ein erfindungsgemäßes Bremsmodul 1 in Außenansicht. Das Bremsmodul 1 ist hier mit einer Spindel 2 eines Antriebssystems verbunden. Das Bremsmodul 1 umfasst ein zylinderförmiges Außengehäuse 3.

**Figur 2** zeigt das Bremsmodul 1 der Fig.1 in Schnittansicht. Das Antriebssystem umfasst eine mit der Spindel 2 verbundene Spindelmutter 4. Die Spindelmutter 4 greift im Bremsbetrieb in eine radial zur Längsachse der Spindel außerhalb die Spindelmutter 4 angeordnete Bremsscheibe 5 des Bremsmoduls 1 ein. Die Bremsscheibe 5 umfasst mindestens zwei Reibflächen die an angrenzenden Reibflächen von zwei Anlaufscheiben 6 im Bremsbetrieb infolge relativer Rotation der Bremsscheibe 5 gegenüber den Anlaufscheiben 6 um die Längsachse reiben. Dadurch wird ein Bremsdrehmoment auf die Spindel 2 des Antriebssystems ausgeübt. Eine Feder 7 übt eine Federkraft entlang der Längsachse auf eine der Anlaufscheiben 6 aus, wodurch die Bremsscheibe 5 und die Anlaufscheiben 6 aneinander angepresst werden, um sie im Reibkontakt zu halten. Die Stärke der Federkraft ist ein Parameter, über den sich die Größe der Bremskraft festlegen lässt. In dieser Ausführungsform ist die Feder 7 eine Wellenfeder.

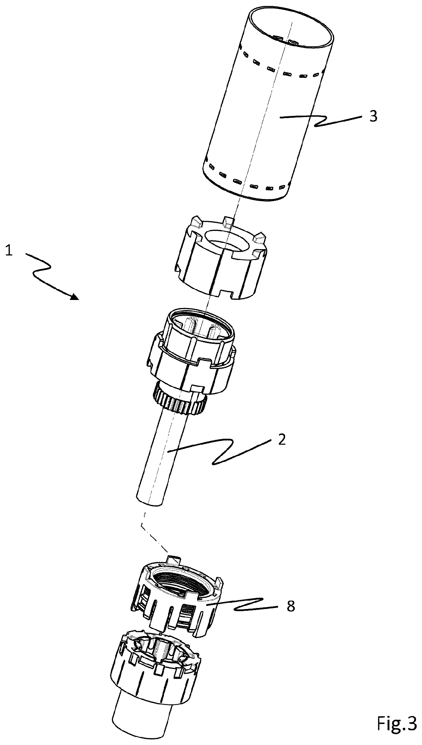

**Figur 3** zeigt das Bremsmodul 1 der Fig.1 und 2 in Explosionsdarstellung. Die Bremsscheibe 5, die Anlaufscheiben 6 und die Feder 7 sind hier alle in einem Gehäuse 8 angeordnet, dessen Aufbau im Folgenden erklärt wird.

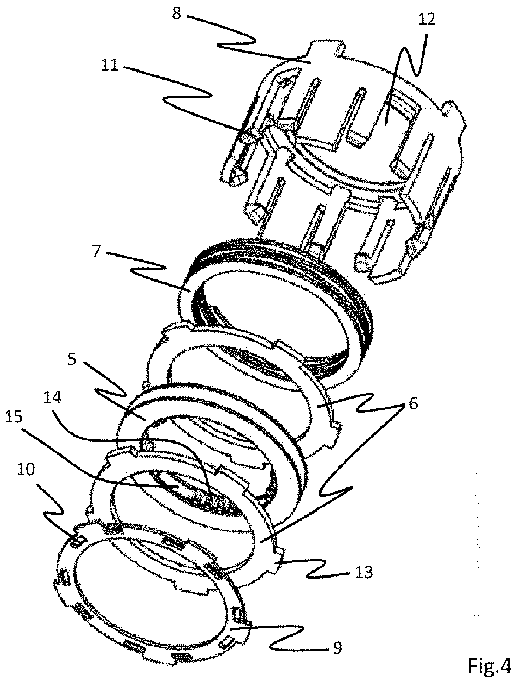

**Figur 4** zeigt einen Teil des Bremsmoduls 1 der Fig.1, 2 und 3 in einer weiteren Explosionsdarstellung. Das Bremsmodul 1 umfasst zusätzlich zum Gehäuse 8 eine Deckscheibe 9. Im Gehäuse 8 sind die Bremsscheibe 5, die zwei Anlaufscheiben 6 und die Feder 7 koaxial um die Längsachse der Spindel (hier nicht dargestellt) geführt. Das Gehäuse 8 ist durch eine Rastverbindung mit der Deckscheibe 9 verbunden, wodurch die Bremsscheibe 5, die zwei Anlaufscheiben 6 und die Feder 7 im Gehäuse 8 gehalten werden. Die Deckscheibe 9 weist Rastausnehmungen 10 auf, in die Rasthaken 11 des Gehäuses 8 eingreifen können. Der Aufbau des Bremsmoduls entlang der Längsachse ist somit: Feder 7, Anlaufscheibe 6, Bremsscheibe 5, Anlaufscheibe 6, Deckscheibe 9. Diese Komponenten sind alle im zusammengesetzten Zustand zumindest teilweise vom Gehäuse 8 umgeben. Damit lässt sich eine einfache Montage des Bremsmoduls 1 im Antriebssystem erreichen, ohne dass die Gefahr besteht, einen Teil des Bremsmoduls 1 zu verlieren.

Das Gehäuse 8 umfasst weiterhin eine Anzahl von, beispielsweise fünf, um die Längsachse der Spindelmutter 4 in Umfangsrichtung des Gehäuses gleichmäßig verteilte Gehäuseschlitzen 12 mit einer Schlitzlängsachse parallel zu der Längsachse. In die Gehäuseschlitze 12 greifen radial von der Längsachse nach außen gerichtete Anlaufscheibenvorsprünge 13 der Anlaufscheiben 6 ein. Dadurch wird eine relative Rotation des Gehäuses 8 und der Anlaufscheiben 6 gegeneinander um die Längsachse verhindert, wenn sich die Bremsscheibe 5 mit der Spindel 2 dreht und im Bremsbetrieb an den Anlaufscheiben 6 reibt.

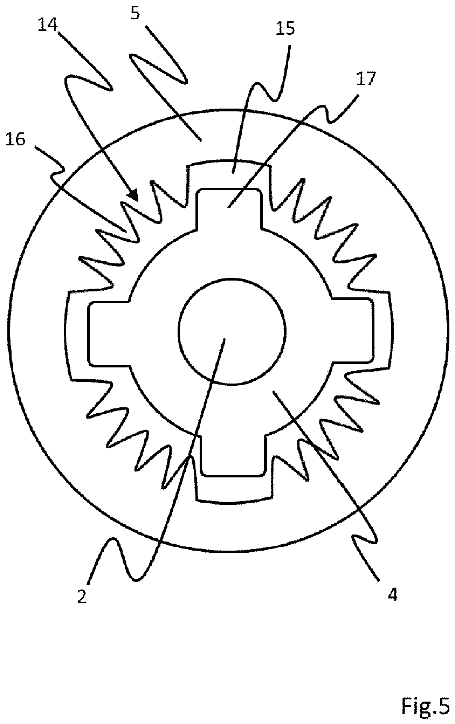

Die Bremsscheibe 5 ist ringförmig und weist eine zentrale Ausnehmung auf. Die zentrale Ausnehmung hat einen näherungsweise kreisförmigen Querschnitt mit mindestens zwei, beispielsweise vier, in Umfangsrichtung der Bremsscheibe 5 um die Längsachse gleichmäßig verteilten Zahnabschnitten 14, die durch Aussparungen 15 voneinander getrennt sind. Dies wird anhand der folgenden Figur 5 detaillierter erklärt.

**Figur 5** zeigt eine erfindungsgemäße Bremsscheibe 5 und eine Spindelmutter 4 in Aufsicht. Die Zahnabschnitte 14 umfassen radial nach innen vorspringende Zähne 16. Eine solche Ausgestaltung erlaubt eine flexible Verbindung der Bremsscheibe 5 mit der Spindelmutter 4 des Antriebssystems. Die Spindelmutter 4 umfasst Spindelmutterflügel 17, die in die Aussparungen 15 eingreifen, und die Übertragung des Drehmoments zwischen der Spindelmutter 4 und der Bremsscheibe 5 erfolgt über den Kontakt zwischen den Spindelmutterflügeln 17 und den Zähnen 16. Ein Verkanten der Bremsscheibe 5 und der Spindelmutter 4 wird dadurch unwahrscheinlicher als bei einer formschlüssigen Verbindung. Dies erleichtert es, das Bremsmodul 1 erst spät im Produktionsprozess eines Antriebssystems zu installieren, Vibrationsschäden durch einen späteren Montagezeitpunkt zu vermeiden und das Bremsmodul 1 zu ersetzen, wenn das Bremsmodul 1 defekt ist, da das Bremsmodul 1 einfacher auf die Spindelmutter 4 aufgesetzt werden kann.

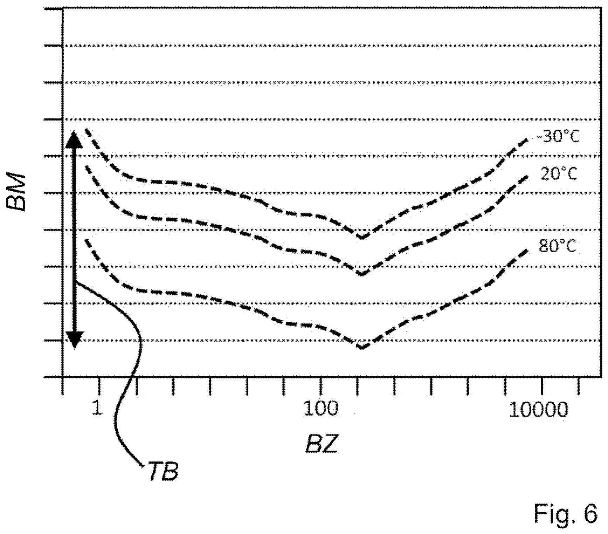

**Figur 6** zeigt eine qualitative Darstellung der Abhängigkeit des Bremsdrehmoments BM eines Bremsmoduls des Standes der Technik von der Anzahl der Bremszyklen BZ und der Temperatur. Die Bremszyklen sind logarithmisch dargestellt und die Entwicklung der Bremskraft ist für drei Temperaturen aufgetragen, die alle relevanten Betriebstemperaturen abdecken. Ein solches Bremsmodul verwendet beispielsweise Anlaufscheiben aus nitriertem Chromstrahl und eine Bremsscheibe aus gesintertem Stahl. Wie erkennbar ist, verringert sich in den ersten einigen hundert Bremszyklen die Bremskraft des Bremsmoduls, um dann nach und nach wieder anzusteigen. Weiterhin ist erkennbar, dass die Bremskraft stark mit der Temperatur variiert, was durch den Doppelpfeil verdeutlicht ist, der den Toleranzbereich TB des Bremssystems anzeigt.

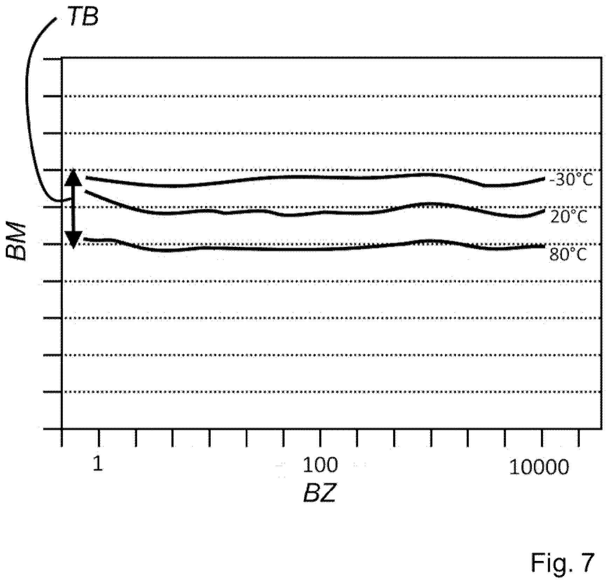

**Figur 7** zeigt eine qualitative Darstellung der Abhängigkeit des Bremsdrehmoments BM eines erfindungsgemäßen Bremsmoduls 1 von der Anzahl der Bremszyklen BZ und der Temperatur. Die Bremszyklen sind erneut logarithmisch dargestellt und die Entwicklung der Bremskraft ist für drei Temperaturen aufgetragen, die alle relevanten Betriebstemperaturen abdecken. Wie erkennbar ist, variiert die Bremskraft nur leicht in Abhängigkeit der abgelaufenen Bremszyklen. Weiterhin ist erkennbar, dass die Bremskraft deutlich weniger mit der Temperatur variiert, was durch den Doppelpfeil verdeutlicht ist, der den Toleranzbereich TB des Bremssystems anzeigt. Somit ist die Bremskraft deutlich besser definierbar und muss nicht wie im Stand der Technik so gewählt werden, dass sie für einen Großteil der Lebensdauer und des Temperaturbereichs deutlich zu groß ist. Dadurch wird der Abrieb der Bremsscheibe und der Anlaufscheiben im Mittel verringert, was zum Teil die erhöhte Lebensdauer des Bremssystems erklärt. Ein Antriebssystem mit einem solchen Bremsmodul ist durch die in den meisten Betriebssituationen geringere Bremskraft auch komfortabler in der Handhabung sowie energieeffizienter und langlebiger.

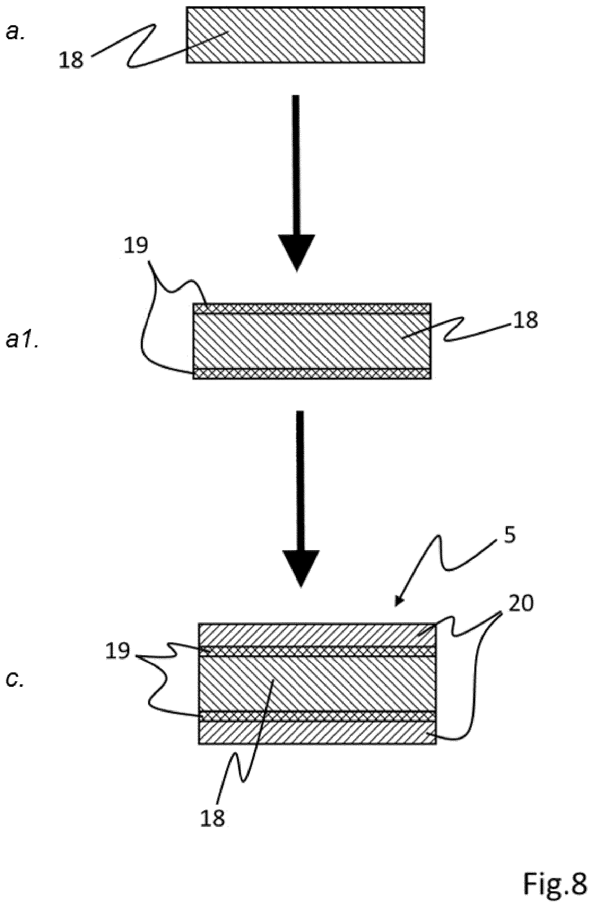

**Figur 8** zeigt eine schematische Ablaufdarstellung eines erfindungsgemäßen Herstellungsverfahrens. Das erfindungsgemäße das Herstellungsverfahren umfasst hier die folgenden Schritte:
a. Bereitstellen eines, beispielsweise scheibenförmigen, Trägers 18, beispielsweise aus Kunststoff,
optional: a1. Beschichten des Trägers 18 auf mindestens einer Seite (hier auf zwei Seiten) mit einer Klebstoffschicht 19,
c. Beschichten des Trägers 18 (bzw. optional der Klebstoffschicht 19) auf mindestens einer Seite (hier auf zwei Seiten) mit einer Fasern und Kohlenstoff, nämlich ein Karbonfasergewebe, umfassenden Reibschicht 20, um die Bremsscheibe 5 zu formen.

Der Träger 18 kann beispielsweise weniger elastisch oder elastischer sein als eine komplett aus der Reibschicht 20 bestehende Bremsscheibe 5. Weiterhin kann der Träger 18 aus einem kostengünstigen Kunststoff bestehen.

Der Schritt des Beschichtens des Trägers 18 kann ein Auftragen einer, vorzugsweise teilelastischen, Klebstoffschicht 19 auf mindestens einer Seite des Trägers 18 umfassen, wonach die Reibschicht 20 auf die Klebstoffschicht 19 aufgetragen wird.

### BEZUGSZEICHENLISTE

- 1: Bremsmodul
- 2: Spindel
- 3: Außengehäuse
- 4: Spindelmutter
- 5: Bremsscheibe
- 6: Anlaufscheibe
- 7: Feder
- 8: Gehäuse
- 9: Deckscheibe
- 10: Rastausnehmungen
- 11: Rasthaken
- 12: Gehäuseschlitz
- 13: Anlaufscheibenvorsprung
- 14: Zahnabschnitt
- 15: Aussparung
- 16: Zahn
- 17: Spindelmutterflüge
- 18: Träger
- 19: Klebstoffschicht
- 20: Reibschicht
- BM: Bremsdrehmoment
- BZ: Anzahl Bremszyklen
- TB: Toleranzbereich

## Patentansprüche

1. Bremsmodul (1) für ein Antriebssystem, insbesondere für Türen, umfassend mindestens eine Anlaufscheibe (6) und mindestens eine Bremsscheibe (5),
a) wobei die mindestens eine Anlaufscheibe (6) und die mindestens eine Bremsscheibe (5) jeweils mindestens eine Reibfläche aufweisen, die im Bremsbetrieb aneinander reiben,
b) wobei mindestens eine der Reibflächen der Bremsscheibe (5) von einer Reibschicht (20) zum Schutz der Bremsscheibe (5) und/oder Anlaufscheibe (6) vor Verschleiß gebildet ist, wobei
c) die Bremsscheibe (5) einen Träger (18) und mindestens eine mit dem Träger (18) verbundene Reibschicht (20) umfasst,
d) wobei die Reibschicht (20) ein Karbonfasergewebe umfasst, **dadurch gekennzeichnet, dass**
e) die Anlaufscheibe (6) aus nicht-nitriertem Chrom-5-Stahl besteht.

2. Bremsmodul (1) nach Anspruch 1,
**dadurch gekennzeichnet, dass**
das Bremsmodul (1) je eine Anlaufscheibe (6) auf zwei gegenüberliegenden Seiten der Bremsscheibe (5) umfasst, wobei die Bremsscheibe (5) je eine jeder der Anlaufscheiben (6) zugewandte Reibfläche mit je einer Reibschicht (20) umfasst.

3. Bremsmodul (1) nach einem der Ansprüche 1 bis 2,
**dadurch gekennzeichnet, dass**
die Bremsscheibe (5)
a) einen Träger (18) aus einem Kunststoff und/oder
b) zwei auf gegenüberliegenden Seiten des Trägers (18) mit dem Träger (18) verbundene Reibschichten (20) umfasst.

4. Bremsmodul (1) nach einem der Ansprüche 1 bis 3,
**dadurch gekennzeichnet, dass**
die mindestens eine Reibschicht (20) stoffschlüssig, bevorzugt mit einer, vorzugsweise teilelastischen, Klebstoffschicht (19) an dem Träger (18) befestigt ist.

5. Bremsmodul (1) nach einem der Ansprüche 1 bis 4,
**dadurch gekennzeichnet, dass**
die Bremsscheibe (5) ringförmig ist und bevorzugt eine zentrale Ausnehmung aufweist, wobei die zentrale Ausnehmung einen näherungsweise kreisförmigen Querschnitt mit mindestens zwei durch Aussparungen (15) getrennten Zahnabschnitten (14) aufweist.

6. Bremsmodul (1) nach einem der Ansprüche 1 bis 5,
**dadurch gekennzeichnet, dass**
die Bremsscheibe (5) und / oder die Anlaufscheibe (6) in einer Reibfläche eine Anzahl von Vertiefungen zur Aufnahme eines Schmiermittels aufweist.

7. Bremsmodul (1) nach einem der Ansprüche 1 bis 6,
**dadurch gekennzeichnet, dass**
das Bremsmodul (1) ein Gehäuse (8) umfasst, in dem die Bremsscheibe (5) und die mindestens eine Anlaufscheibe (6), bevorzugt koaxial um eine zentrale Achse, geführt sind, wobei das Bremsmodul (1) bevorzugt eine Deckscheibe (9) umfasst, die besonders bevorzugt durch eine Rastverbindung, mit dem Gehäuse (9) derart verbunden ist, dass die Bremsscheibe (5) und die mindestens eine Anlaufscheibe (6) im Gehäuse (8) gehalten sind.

8. Antriebssystem, insbesondere für eine Tür, umfassend ein Bremsmodul (1) nach einem der vorstehenden Ansprüche.

9. Herstellungsverfahren für ein Bremsmodul (1) nach einem der Ansprüche 1 bis 7 umfassend mindestens eine Anlaufscheibe (6) und mindestens eine Bremsscheibe (5), wobei die mindestens eine Anlaufscheibe (6) und die mindestens eine Bremsscheibe (5) jeweils mindestens eine Reibfläche aufweisen, die im Bremsbetrieb aneinander reiben,
**gekennzeichnet durch folgende Schritte:**
a. Bereitstellen eines Trägers (18),
b. Bereitstellen mindestens eines Anlaufscheibenrohlings für die Anlaufscheibe (6) aus nicht-nitriertem Chrom-5-Stahl, und
c. Beschichten des Trägers (18) auf mindestens einer Seite mit einer ein Karbonfasergewebe umfassenden Reibschicht (20) zum Verschleißschutz, um die Bremsscheibe (5) zu formen.

10. Herstellungsverfahren nach Anspruch 9,
**dadurch gekennzeichnet, dass**
der Schritt des Beschichtens des Trägers (18) ein Auftragen einer, vorzugsweise teilelastischen, Klebstoffschicht (19) auf mindestens einer Seite des Trägers (18) umfasst, wonach die Reibschicht (20) auf die Klebstoffschicht (19) aufgetragen wird.

11. Herstellungsverfahren nach einem der Ansprüche 9 bis 10,
**gekennzeichnet durch folgende Schritte:**
Polieren und/oder Entgraten des Anlaufscheibenrohlings, um die Anlaufscheibe (6) zu formen.

## Claims

1. A brake module (1) for a drive system, in particular for doors, comprising at least one thrust washer (6) and at least one brake disc (5),
a. wherein the at least one thrust washer (6) and the at least one brake disc (5) each comprise at least one friction surface which rub against each other in braking operation, and
b . wherein at least one of the friction surfaces of the brake disc (5) is formed by a friction layer (20) for protecting the brake disc (5) and/or thrust washer (6) from wear,
c . wherein the brake disc (5) comprises a carrier (18) and at least one friction layer (20) connected to the carrier (18),
d . wherein the friction layer (20) comprises a carbon fiber mesh, **characterized in that**
e . the thrust washer (6) consists of non-nitrided chromium-5 steel.

2. The brake module (1) according to claim 1,
**characterized in that**
the brake module (1) comprises a thrust washer (6) on each of two opposite sides of the brake disc (5), wherein the brake disc (5) comprises a friction surface facing each of the thrust washers (6), each friction surface having a friction layer (20).

3. The brake module (1) according to one of claims 1 to 2,
**characterized in that**
the brake disc (5) comprises
a. a carrier (18) made of a plastic, and/or
b. two friction layers (20) connected to the carrier (18) on opposite sides of the carrier (18).

4. The brake module (1) according to one of claims 1 to 3,
**characterized in that**
the at least one friction layer (20) is fastened to the carrier (18) by means of a material bond, preferably by means of a preferably partially elastic glue layer (19).

5. The brake module (1) according to one of claims 1 to 4,
**characterized in that**
the brake disc (5) is annular and preferably comprises a central aperture, wherein the central aperture has an approximately circular cross-section having at least two tooth sections (14) separated by clearances (15).

6. The brake module (1) according to one of claims 1 to 5,
**characterized in that**
the brake disc (5) and/or the thrust washer (6) has a number of depressions in a friction surface for receiving a lubricant.

7. The brake module (1) according to one of claims 1 to 6,
**characterized in that**
the brake module (1) comprises a housing (8) in which the brake disc (5) and the at least one thrust washer (6) are guided, preferably coaxially about a central axis, wherein the brake module (1) preferably comprises a cover plate (9) which is particularly preferably connected to the housing (9) by a latching connection such that the brake disc (5) and the at least one thrust washer (6) are held in the housing (8).

8. A drive system, in particular for a door, comprising a brake module (1) according to one of the preceding claims.

9. A production method for a brake module (1) according to one claims 1 to 7 comprising at least one thrust washer (6) and at least one brake disc (5), wherein the at least one thrust washer (6) and the at least one brake disc (5) each have at least one friction surface which rub against each other during braking operation, **characterized by the following steps:**
a. providing a carrier (18),
b. providing at least one thrust washer blank consisting of non-nitrided chromium-5-steel for the thrust washer (6), and
c. coating the carrier (18) on at least one side with a friction layer (20) comprising a carbon fiber mesh for wear protection, in order to form the brake disc (5).

10. The production method according to claim 9,
**characterized in that**
the step of coating the carrier (18) comprises applying a, preferably partially elastic, glue layer (19) on at least one side of the carrier (18), whereafter the friction layer (20) is applied on the glue layer (19).

11. The production method according to one of claims 9 to 10,
**characterized by the following steps**
polishing and/or deburring the thrust washer blank in order to form the thrust washer (6).

## Revendications

1. Module de freinage (1) pour un système d'entraînement, en particulier pour des portes, comprenant au moins un disque de butée (6) et au moins un disque de frein (5),
a) ledit au moins un disque de butée (6) et l'au moins un disque de frein (5) présentant chacun au moins une surface de friction qui frottent l'une contre l'autre en mode de freinage,
b) au moins une des surfaces de friction du disque de frein (5) étant formée par une couche de friction (20) pour protéger le disque de frein (5) et/ou le disque de butée (6) contre l'usure,
c) le disque de frein (5) comprenant un support (18) et au moins une couche de friction (20) reliée au support (18),
d) la couche de friction (20) comprenant un tissu de fibres de carbone **caractérisé en ce que**
e) le disque de butée (6) est en acier au chrome-5 non nitruré.

2. Module de freinage (1) selon la revendication 1,
**caractérisé en ce que**
le module de freinage (1) comprend un disque de butée (6) sur chacun de deux côtés opposés du disque de frein (5), le disque de frein (5) comprenant une surface de friction orientée vers chacun des disques de butée (6), chacune des surfaces de friction comprenant une couche de friction (20).

3. Module de freinage (1) selon l'une quelconque des revendications 1 à 2,
**caractérisé en ce que**
le disque de frein (5) comprend
a) un support (18) en matière plastique, et/ou
b) deux couches de friction (20) reliées au support (18) sur des côtés opposés du support (18).

4. Module de freinage (1) selon l'une quelconque des revendications 1 à 3, **caractérisé en ce que**
ladite au moins une couche de friction (20) est fixée au support (18) par liaison de matière, de préférence avec une couche de colle (19), de préférence partiellement élastique.

5. Module de freinage (1) selon l'une quelconque des revendications 1 à 4, **caractérisé en ce que**
le disque de frein (5) est annulaire et présente de préférence un évidement central, l'évidement central présentant une section transversale approximativement circulaire avec au moins deux sections de dents (14) séparées par des écartements (15).

6. Module de freinage (1) selon l'une quelconque des revendications 1 à 5, **caractérisé en ce que**
le disque de frein (5) et/ou le disque de butée (6) présente dans une surface de friction un certain nombre de creux pour recevoir un lubrifiant.

7. Module de freinage (1) selon l'une quelconque des revendications 1 à 6, **caractérisé en ce que**
le module de freinage (1) comprend un boîtier (8) dans lequel le disque de frein (5) et ledit au moins un disque de butée (6) sont guidés, de préférence coaxialement autour d'un axe central, le module de freinage (1) comprenant de préférence un disque de recouvrement (9) qui est relié, de manière particulièrement préférée par une liaison par encliquetage, au boîtier (9) de telle sorte que le disque de frein (5) et ledit au moins un disque de butée (6) sont maintenus dans le boîtier (8).

8. Système d'entraînement, en particulier pour une porte, comprenant un module de freinage (1) selon l'une des revendications précédentes.

9. Procédé de fabrication d'un module de freinage (1) selon l'une des revendications 1 à 7 comprenant au moins un disque de butée (6) et au moins un disque de frein (5), ledit au moins un disque de butée (6) et ledit au moins un disque de frein (5) présentant chacun au moins une surface de friction qui frottent l'une contre l'autre en mode de freinage,
**caractérisé par les étapes suivantes :**
a. fournir un support (18),
b. fournir au moins une ébauche de disque de butée en acier au chrome-5 non nitruré pour le disque de butée (6), et
c. revêtir le support (18) sur au moins une face avec une couche de friction (20) comprenant un tissu de fibres de carbone pour la protection contre l'usure afin de former le disque de frein (5).

10. Procédé de fabrication selon la revendication 9,
**caractérisé en ce que**
l'étape de revêtir le support (18) comprend l'application d'une couche de colle (19), de préférence partiellement élastique, sur au moins un côté du support (18), après quoi la couche de friction (20) est appliquée sur la couche de colle (19).

11. Procédé de fabrication selon l'une des revendications 9 à 10,
**caractérisé par les étapes suivantes :**
polir et/ou ébavurer l'ébauche de disque de butée afin de former le disque de butée (6).
